# EUROPEAN PATENT APPLICATION

(11) **EP 3 952 247 A1**
(43) Date of publication of application: **09.02.2022**
(21) Application number: 20779531.1
(22) Date of filing: 12.03.2020
(51) Int. Cl.: H04L 29/08

(54) **HETEROGENEOUS OPERATING SYSTEM-BASED MESSAGE TRANSMISSION SYSTEM AND METHOD, AND VEHICLE**

(30) Priority: 28.03.2019 CN 201910242370
(71) Applicant: BYD Company Limited, Shenzhen, Guangdong 518118 (CN)
(72) Inventor: LIN, Guofeng, Shenzhen, Guangdong 518118 (CN); WANG, Kun, Shenzhen, Guangdong 518118 (CN)
(74) Representative: DehnsGermany Partnerschaft von Patentanwälten
(86) International application number: PCT/CN2020/079037
(87) International publication number: WO 2020/192443

(57) **Abstract**

The present disclosure discloses a message transmission system and method based on a heterogeneous operating system and a vehicle. In the system, a second message sending end in a second operating system is connected to a first message forwarding agent, and a first message receiving end in a first operating system is connected to the first message forwarding agent.

## Description

### CROSS-REFERENCE TO RELATED APPLICATIONS

The present disclosure claims to the priority of Chinese Patent Application No "201910242370.9" filed by the BYD Co., Ltd. on March 28, 2019 and entitled "MESSAGE TRANSMISSION SYSTEM AND METHOD BASED ON HETEROGENEOUS OPERATING SYSTEM AND VEHICLE".

### FIELD

The present disclosure relates to the field of vehicle technologies, and in particular, to a message transmission system and method based on a heterogeneous operating system and a vehicle.

### BACKGROUND

With continuous penetration of automotive electronics, dashboards, central information displays, and in-vehicle infotainment system terminals face upgrades and integration. The development of processor technologies at present provides a hardware foundation for the integration of full liquid crystal instruments, in-vehicle infotainment systems, vehicle-to-everything modules, HUDs, and the like. The integration inevitably leads to scale expansion of operating systems and software, and a communication problem among a plurality of operating systems becomes particularly important, which is related to stability and safety of the entire vehicle system. Therefore, how to implement mutual communication among a plurality of devices in a plurality of operating systems in a vehicle is a problem that needs to be resolved urgently.

### SUMMARY

An objective of the present disclosure is to resolve at least one of the foregoing technical problems to a certain extent.

In view of this, a first objective of the present disclosure is to provide a message transmission system based on a heterogeneous operating system. The system enables a second message sending end disposed in a second operating system to perform message communication with a second message receiving end disposed in the second operating system by using a first message forwarding agent, to facilitate communication between devices disposed in different operating systems.

A second objective of the present disclosure is to provide a message transmission method based on a heterogeneous operating system.

A third objective of the present disclosure is to provide a vehicle.

To achieve the foregoing objectives, a message transmission system based on a heterogeneous operating system according to an embodiment of a first aspect of the present disclosure is provided. The message transmission system includes a first operating system and a second operating system. The first operating system is different from the second operating system. A network topology corresponding to the first operating system includes a first message forwarding agent and a first message receiving end. A network topology corresponding to the second operating system includes a second message sending end. The first message forwarding agent is separately connected to the first message receiving end and the second message sending end, and is configured to perform message transmission between the second message sending end and the first message receiving end.

In the message transmission system based on a heterogeneous operating system provided in this embodiment of the present disclosure, the second message sending end in the second operating system is connected to the first message forwarding agent, and the first message receiving end in the first operating system is connected to the first message forwarding agent. Therefore, the second message sending end disposed in the second operating system may perform message communication with the first message receiving end disposed in the first operating system by using the first message forwarding agent, to facilitate communication between devices disposed in different operating systems.

To achieve the foregoing objectives, in a message transmission method based on a heterogeneous operating system performed by the message transmission system based on a heterogeneous operating system according to an embodiment of a second aspect of the present disclosure, the first message forwarding agent performs message transmission between the first message receiving end and the second message sending end.

In the message transmission method based on a heterogeneous operating system provided in this embodiment of the present disclosure, the second message sending end in the second operating system is connected to the first message forwarding agent, and the first message receiving end in the first operating system is connected to the first message forwarding agent. Therefore, the second message sending end disposed in the second operating system may perform message communication with the first message receiving end disposed in the first operating system by using the first message forwarding agent, to facilitate communication between devices disposed in different operating systems.

To achieve the foregoing objective, an embodiment of a third aspect of the present disclosure provides a vehicle. The vehicle includes the message transmission system based on a heterogeneous operating system according to the embodiment of the first aspect of the present disclosure.

The additional aspects and advantages of the present disclosure will be provided in the following description, some of which will become apparent from the following description or may be learned from practices of the present disclosure.

### BRIEF DESCRIPTION OF THE DRAWINGS

The foregoing and/or additional aspects and advantages of the present disclosure will become apparent and comprehensible in the description made with reference to the following accompanying drawings, where:
FIG. 1 is a schematic structural diagram of a message transmission system based on a heterogeneous operating system according to an embodiment of the present disclosure;
FIG. 2 is a schematic structural diagram of a message transmission system based on a heterogeneous operating system according to another embodiment of the present disclosure;
FIG. 3 is a schematic diagram of a processing process executed by a message sending end according to an embodiment of the present disclosure;
FIG. 4 is a schematic diagram of a processing process executed by a message forwarding agent according to an embodiment of the present disclosure;
FIG. 5 is a schematic diagram of a processing process executed by a message receiving end according to an embodiment of the present disclosure;
FIG. 6 is a schematic structural diagram of a message transmission system based on a heterogeneous operating system according to another embodiment of the present disclosure;
FIG. 7 is a schematic flowchart of a message transmission method based on a heterogeneous operating system according to an embodiment of the present disclosure;
FIG. 8 is a schematic flowchart of a message transmission method based on a heterogeneous operating system according to another embodiment of the present disclosure; and
FIG. 9 is a schematic structural diagram of a message transmission system based on a heterogeneous operating system according to another embodiment of the present disclosure.

Reference numerals:

First operating system 10, second operating system 20, first message forwarding agent 101, first message receiving end 102, first message sending end 103, second message sending end 201, second message forwarding agent 202, and second message receiving end 203.

### DETAILED DESCRIPTION

The following describes embodiments of the present disclosure in detail. Examples of the embodiments are shown in the accompanying drawings, and same or similar reference numerals in all the accompanying drawings indicate the same or similar components or components having the same or similar functions. The embodiments described below with reference to the accompanying drawings are exemplary, aiming to explain the present disclosure, but cannot be understood as a limitation on the present disclosure.

The following describes a message transmission system and method based on a heterogeneous operating system and a vehicle in the embodiments of the present disclosure with reference to the accompanying drawings.

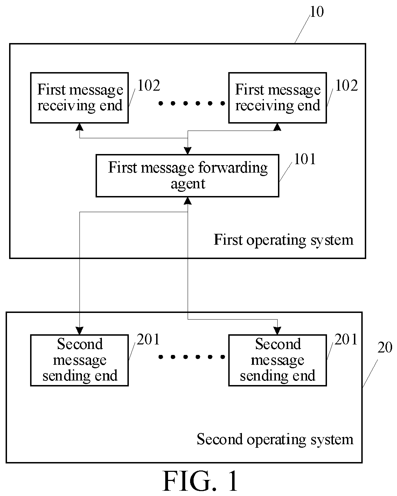

FIG. 1 is a schematic structural diagram of a message transmission system based on a heterogeneous operating system according to an embodiment of the present disclosure.

It should be noted that, an example in which there are two heterogeneous operating systems in the message transmission system is used for description in this embodiment of the present disclosure.

It should be noted that, the message transmission system in this embodiment of the present disclosure is located in the same device. For example, the message transmission system may be disposed in a vehicle.

As shown in FIG. 1, the message transmission system includes a first operating system 10 and a second operating system 20. The first operating system 10 is different from the second operating system 20. A network topology corresponding to the first operating system 10 includes a first message forwarding agent 101 and a first message receiving end 102. A network topology corresponding to the second operating system 20 includes a second message sending end 201.

The first message forwarding agent 101 is separately connected to the first message receiving end 102 and the second message sending end 201, and is configured to perform message transmission between the second message sending end 201 and the first message receiving end 102.

It should be understood that for the first message forwarding agent 101 and the first message receiving end 102 in the first operating system 10, an operating system of the first message forwarding agent 101 and the first message receiving end 102 is a first operating system. That is, the first message forwarding agent 101 and the first message receiving end 102 are devices with the first operating system.

In this embodiment of the present disclosure, the second message sending end in the second operating system is connected to the first message forwarding agent. The first message receiving end in the first operating system is connected to the first message forwarding agent. Therefore, the second message sending end disposed in the second operating system may perform message communication with the first message receiving end disposed in the first operating system by using the first message forwarding agent, to facilitate communication between devices disposed in different operating systems.

The first message forwarding agent 101 provides a channel for data forwarding between a message sending end and a message receiving end.

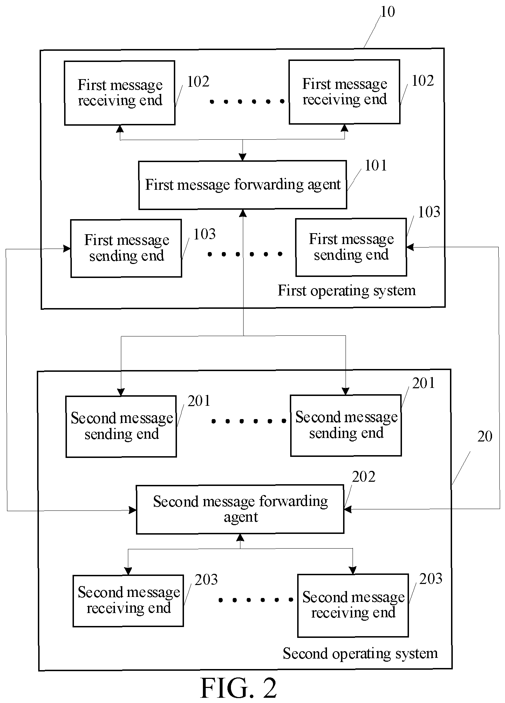

In an embodiment of the present disclosure, in an actual application, in addition to a requirement of communication between the second message sending end 201 in the second operating system 20 and the first message receiving end 102 in the first operating system 10, to meet a requirement of communication between that a message receiving end in the second operating system 20 and a message sending end in the first operating system 10, in an exemplary implementation, as shown in FIG. 2, the network topology corresponding to the first operating system 10 may further include a first message sending end 103, and the network topology corresponding to the second operating system 20 further includes a second message forwarding agent 202 and a second message receiving end 203.

The second message forwarding agent 202 is separately connected to the first message sending end 103 and the second message receiving end 203, and is configured to perform message transmission between the first message sending end 103 and the second message receiving end 203.

In this embodiment of the present disclosure, the first message sending end in the first operating system is connected to the second message forwarding agent, and the second message receiving end in the second operating system is connected to the second message forwarding agent. Therefore, the first message sending end disposed in the first operating system may perform message communication with the second message receiving end disposed in the second operating system by using the second message forwarding agent, to facilitate communication between devices disposed in different operating systems.

In an embodiment of the present disclosure, to improve security of communication, in an exemplary implementation, the first message forwarding agent 101 is communicatively connected to the first message receiving end 102 through a specified first IP address and first port number, and the first message forwarding agent 101 is communicatively connected to the second message sending end 201 through the specified first IP address and first port number. The first IP address and the first port number are bound to the first message forwarding agent 101.

Specifically, for the first message receiving end 102, to enable the first message receiving end 102 to provide services to the second message sending end 201, after a corresponding first message receiving end 102 is added to the network topology corresponding to the first operating system 10, the first message receiving end 102 sends a connection request to the first message forwarding agent 101. The connection request includes the first IP address and the first port number corresponding to the first message forwarding agent 101.

Correspondingly, the first message forwarding agent 101 receives and recognizes the connection request of the first message receiving end 102. If the connection request is granted, a communication connection is established between the first message receiving end 102 and the first message forwarding agent 101.

Specifically, for the second message sending end 201, to enable the second message sending end 201 to communicate with a corresponding message receiving end in the first operating system 10, after the second message sending end 201 is added to the network topology corresponding to the second operating system 20, the second message sending end 201 sends a connection request to the first message forwarding agent 101. The connection request includes the first IP address and the first port number corresponding to the first message forwarding agent 101.

Correspondingly, the first message forwarding agent 101 receives and recognizes the connection request of the second message sending end 201. If the connection request is granted, a communication connection is established between the second message sending end 201 and the first message forwarding agent 101. Therefore, the second message sending end 201 may be connected to the first message forwarding agent 101 that needs to request data, thereby facilitating subsequent communication between the second message sending end 201 and a corresponding message receiving end in the second operating system 20 by using the first message forwarding agent 101.

In an embodiment of the present disclosure, to improve security of communication, in an exemplary implementation, the second message forwarding agent 202 is connected to the first message sending end 103 through a specified second IP address and second port number, and the second message forwarding agent 202 is communicatively connected to the second message receiving end 203 through the specified second IP address and second port number. The second IP address and the second port number are bound to the second message forwarding agent 202.

Specifically, for the second message receiving end 203, to enable the second message receiving end 203 to provide services to the first message sending end 103, after a corresponding second message receiving end 203 is added to the network topology corresponding to the second operating system 20, the second message receiving end 203 sends a connection request to the second message forwarding agent 202. The connection request includes the second IP address and the second port number corresponding to the second message forwarding agent 202.

Correspondingly, the second message forwarding agent 202 receives and recognizes the connection request of the second message receiving end 203. If the connection request is granted, a communication connection is established between the second message receiving end 203 and the second message forwarding agent 202.

Specifically, for the first message sending end 103, to enable the first message sending end 103 to communicate with the message receiving end in the second operating system 20, after the first message sending end 103 is added to the network topology corresponding to the first operating system 10, the first message sending end 103 sends a connection request to the second message forwarding agent 202. The connection request includes the second IP address and the second port number corresponding to the second message forwarding agent 202.

Correspondingly, the second message forwarding agent 202 receives and recognizes the connection request of the first message sending end 103. If the connection request is granted, a communication connection is established between the first message sending end 103 and the second message forwarding agent 202. Therefore, the first message sending end 103 may be connected to the second message forwarding agent 202 that needs to request data, thereby facilitating subsequent communication between the first message sending end 103 and the message receiving end in the second operating system 20 by using the second message forwarding agent 202.

In an embodiment of the present disclosure, to enable the first operating system 10 to provide a plurality of services to other operating systems, there are N first message receiving ends 102. N is a positive integer greater than 1. Each first message receiving end 102 has a service identifier.

The first message forwarding agent 101 is further configured to: receive a first message sent by the second message sending end 201, obtain a first target message receiving end that matches a service identifier in the first message, and forward the first message to the first target message receiving end. The first target message receiving end is at least one of the N first message receiving ends 102.

It should be noted that, to achieve an objective of load balancing, in an exemplary implementation, a plurality of first message receiving ends 102 may be provided with the same service identifier. However, for each first message receiving end 102, the each first message receiving end 102 corresponds to one service identifier.

It should be understood that the service identifier corresponds to a service type, and different service types correspond to different service identifiers.

In an exemplary implementation, a service identifier corresponding to the first message receiving end 102 may be set after the corresponding first message receiving end 102 is added to the network topology corresponding to the first operating system 10.

In an exemplary implementation, to enable two devices with different operating systems to communicate with each other and resolve a problem of scalability in message transmission, the second message sending end 201 is further configured to: serialize the first message, and send a serialized first message to the first message forwarding agent 101.

The first message forwarding agent 101 is further configured to forward the serialized first message to the first target message receiving end.

Correspondingly, the first target message receiving end is further configured to deserialize the serialized first message, to obtain the first message.

In this embodiment of the present disclosure, the transmitted message is processed by using serialization and deserialization transmission technologies, thereby making it easier to transmit user data on a heterogeneous operating system.

To improve security of message transmission, in an exemplary implementation, the second message sending end 201 is further configured to: encrypt the first message, and send an encrypted first message to the first message forwarding agent 101.

The first message forwarding agent 101 is further configured to forward the encrypted first message to the first target message receiving end.

Correspondingly, the first target message receiving end is further configured to decrypt the encrypted first message, to obtain the first message.

In another embodiment of the present disclosure, to facilitate message transmission between devices with different operating systems and improve the security of message transmission, the second message sending end 201 in this embodiment of the present disclosure is further configured to: serialize the first message, encrypt the serialized first message, and send the encrypted message to the first message forwarding agent 101.

Correspondingly, the first message forwarding agent 101 is further configured to forward the message sent by the second message sending end 201 to the first target message receiving end.

Correspondingly, the first target message receiving end is further configured to decrypt and deserialize the received message, to obtain the first message sent by the second message sending end 201.

In an embodiment of the present disclosure, to enable the second operating system 20 to provide a plurality of services, there are M second message receiving ends 203. M is a positive integer greater than 1. Each second message receiving end 203 has a service identifier.

The second message forwarding agent 202 is further configured to: receive a second message sent by the first message sending end 103, obtain a second target message receiving end that matches a service identifier in the second message, and forward the second message to the second target message receiving end.

The second target message receiving end is at least one of the M second message receiving ends 203.

It should be noted that, to achieve an objective of load balancing, in an exemplary implementation, a plurality of second message receiving ends 203 may be provided with the same service identifier. However, for each second message receiving end 203, the each second message receiving end 203 corresponds to one service identifier.

The service identifier corresponds to a service type, and different service types correspond to different service identifiers.

In an exemplary implementation, the service identifier corresponding to the second message receiving end 203 is set after the corresponding second message receiving end 203 is added to the network topology corresponding to the second operating system 20.

It should be noted that, similar to the second message sending end 201 in the second operating system 20, the first message sending end 103 in the first operating system 10 may be further configured to perform first preprocessing on the second message. The first preprocessing includes at least one of serialization and encryption.

Correspondingly, the second message forwarding agent 202 may be further configured to forward the second message obtained after the first preprocessing to a corresponding second target message receiving end.

Correspondingly, the second target message receiving end may perform second preprocessing on the received second message, to obtain the second message sent by a user. The second preprocessing includes at least one of deserialization and decryption.

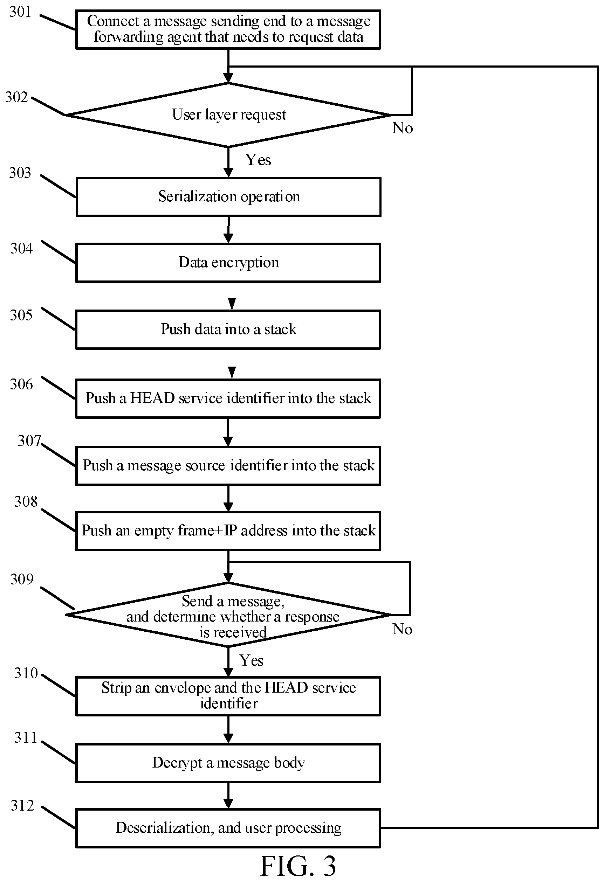

It should be noted that, for a message sending end in any operating system, a processing process of the message sending end is shown in FIG. 3. The following describes the processing process executed by the message sending end with reference to FIG. 3. The processing process may specifically include the following steps:

Step 301. Connect the message sending end to a message forwarding agent that needs to request data.

Step 302. Wait for a user request message.

Step 303. Perform a serialization operation.

Specifically, flatbuffer3 is used to serialize the user request message.

Step 304. Use an encryption algorithm to encrypt the data generated in step 303.

Step 305. Push data into a stack.

Specifically, the data generated in step 304 is pushed into the stack.

Step 306. Push a HEAD service identifier into the stack.

Step 307. Push a message source identifier into the stack.

Step 308. Push an empty frame+an IP address into the stack.

Step 309. Send a message in the stack, and enter receiving and waiting.

A format of a message sent by the message sending end may be HEAD+Payload.

HEAD refers to the service identifier, which is a string converted from one 33-bit unsigned integer. Payload is user data obtained after serialization and encryption.

The message sending end adds an envelope based on a user layer message. An envelope format is IP address+empty frame+message source identifier to ensure that a corresponding message receiving end can find a requested message sending end through a service message field and complete request response communication once.

Step 310. Receive the message, and strip the envelope and the HEAD service identifier.

Step 311. Decrypt a message body in step 310.

Step 312. Deserialize the message body in step 310, perform user processing, and return to step 302.

Specifically, flatbuffer3 is used to deserialize the message body in step 310, and invoke a user layer processing interface.

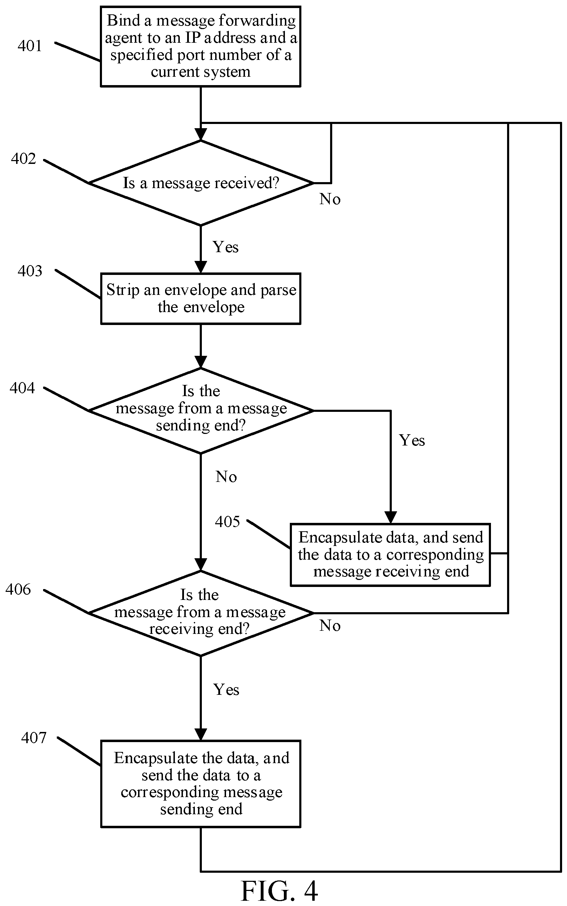

For a message forwarding agent in any operating system, a processing process of the message forwarding agent is shown in FIG. 4. The processing process may specifically include the following steps:

Step 401. Bind the message forwarding agent to an IP address and a specified port number of a current system.

Step 402. Wait till a message is received.

Step 403. Strip an envelope and parse the envelope.

Step 404. Determine whether the message is from a message sending end, and if yes, perform step 405, or otherwise, perform step 406.

Step 405. Re-encapsulate the envelope and user data, send the message to a message receiving end, and return to step 402.

Step 406. Determine whether the message is from the message receiving end, and if yes, perform step 407, or otherwise, perform step 402.

Step 407. Re-encapsulate the envelope and the user data, send the message to a corresponding message sending end, and return to step 402.

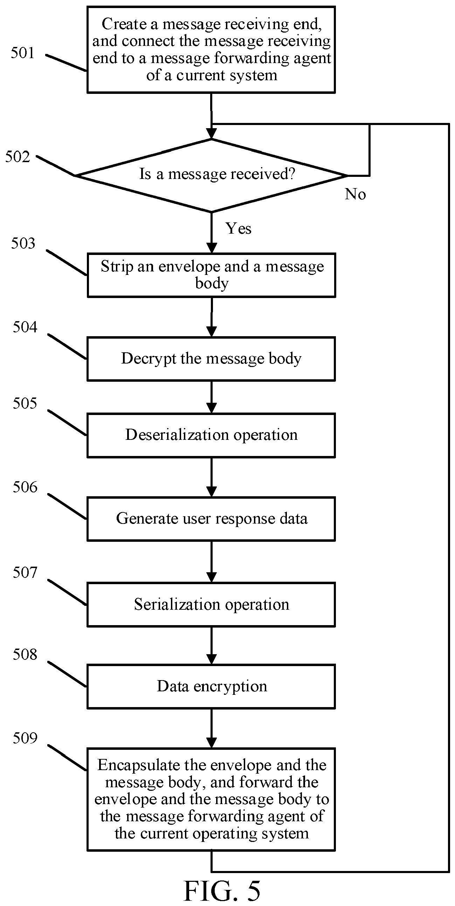

For a message receiving end in any operating system, a processing process of the message receiving end is shown in FIG. 5. The processing process specifically includes the following steps:

Step 501. Create a message receiving end and connect the message receiving end to a message forwarding agent of a current system.

Specifically, after the created message receiving end is connected to the message forwarding agent of the current system, a service identifier may also be set for the message receiving end.

Step 502. Wait till a user request message is received.

Step 503. Receive a user message, and strip an envelope and a message body.

Step 504. Decrypt the message body generated in step 503.

Step 505. Deserialize data generated in step 504.

In an exemplary implementation, for data generated in step 504, flatbuffer4 is used for deserialization.

flatbuffer4 is a tool for serializing and deserializing data.

Step 506. Generate user response data.

Specifically, the data generated in step 505 is used in a user layer, and the user response data is generated.

Step 507. Serialize the response data of the user layer.

In an exemplary implementation, the data generated in step 505 may be serialized by using flatbuffer4.

Step 508. Encrypt the data generated in step 507.

Step 509. Forward the message body and an encapsulation envelope in step 508 to the message forwarding agent in the current operating system, and return to step 502.

It should be understood that the message transmission system based on a heterogeneous operating system in the embodiments of the present disclosure may include K operating systems, and the K operating systems are different from each other.

K is a positive integer greater than or equal to 2.

For any two operating systems in the K operating systems, a message communication mode between the two operating systems is the same as a message communication mode between the first operating system and the second operating system described above. Details are not described herein again.

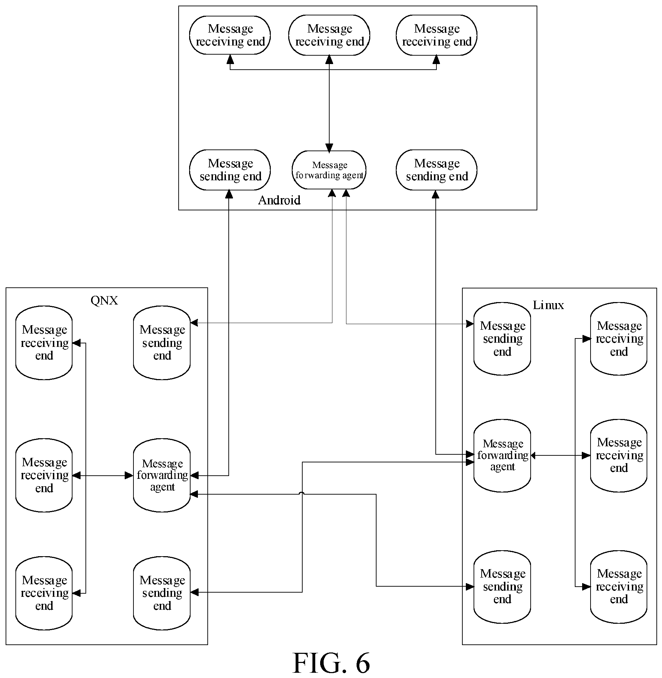

For example, K is 3, and three operating systems may be an Android system, a QNX system, and a Linux system. Assuming that each operating system includes three message receiving ends, two message sending ends, and one message forwarding agent. A schematic structural diagram of network topologies corresponding to the three operating systems is shown in FIG. 6. It can be seen from FIG. 6 that the three message receiving ends in each operating system are connected to the message forwarding agent of the current operating system, and the two message sending ends in each operating system are respectively connected to message forwarding agents of other operating systems.

It should be noted that, when a user needs to add at least one of a new message receiving end and a new message sending end to a corresponding operating system, there is no need to change configuration of the existing message receiving end and message sending end. The user may construct a corresponding communication network in the corresponding operating system as required, and the network topology of the operating system is not changed.

It should be noted that, the QNX system is a real-time, embedded, micro-kernel, priority-based, message-transfer, preemptive-multitasking, multi-user, and fault-tolerant distributed network operating system.

The present invention further provides a message transmission method based on a heterogeneous operating system performed by applying the message transmission system based on a heterogeneous operating system shown in FIG. 1 or FIG. 2. A first message forwarding agent performs message transmission between a first message receiving end and a second message sending end.

In this embodiment of the present disclosure, the second message sending end in the second operating system is connected to the first message forwarding agent, and the first message receiving end in the first operating system is connected to the first message forwarding agent. Therefore, the second message sending end disposed in the second operating system may perform message communication with the first message receiving end disposed in the first operating system by using the first message forwarding agent, to facilitate communication between devices disposed in different operating systems.

In an embodiment of the present disclosure, the first message forwarding agent receives a first message sent by the second message sending end, obtains a first target message receiving end that matches a service identifier in the first message, and forwards the first message to the first target message receiving end. The first target message receiving end is at least one of N first message receiving ends. N is a positive integer greater than 1.

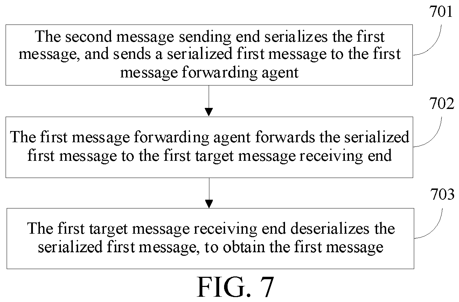

In an embodiment of the present disclosure, to further facilitate message transmission between different heterogeneous operating systems, as shown in FIG. 7, the message transmission method may further include the following steps:

Step 701. The second message sending end serializes the first message, and sends a serialized first message to the first message forwarding agent.

Step 702. The first message forwarding agent forwards the serialized first message to the first target message receiving end.

Step 703. The first target message receiving end deserializes the serialized first message, to obtain the first message.

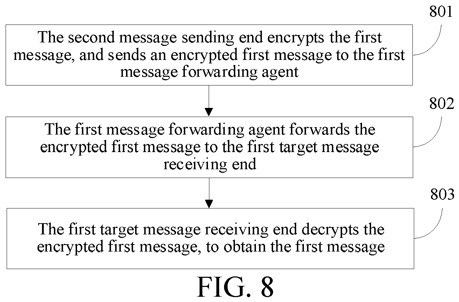

In an embodiment of the present disclosure, to improve security of message communication, as shown in FIG. 8, the message transmission method may further include the following steps:

Step 801. The second message sending end encrypts the first message, and sends an encrypted first message to the first message forwarding agent.

Step 802. The first message forwarding agent forwards the encrypted first message to the first target message receiving end.

Step 803. The first target message receiving end decrypts the encrypted first message, to obtain the first message.

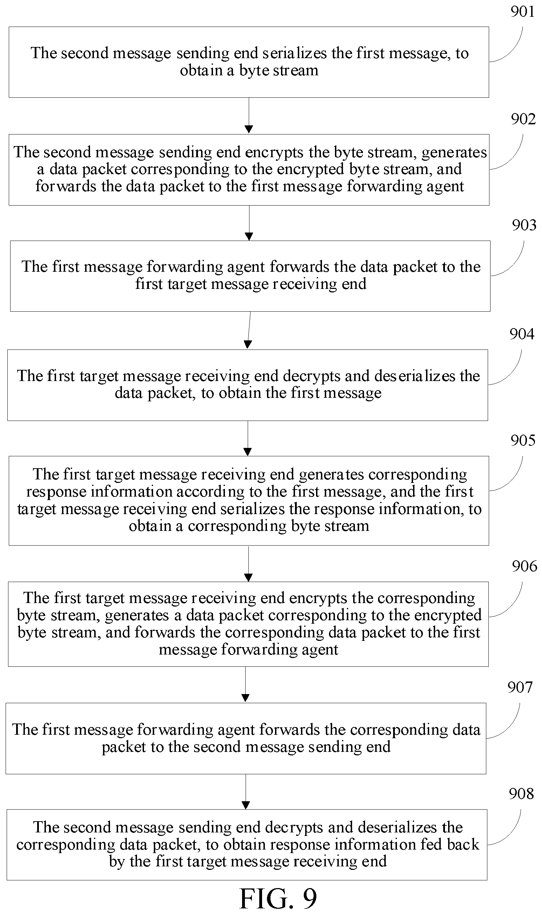

In an embodiment of the present disclosure, to ensure communication between the two operating systems and improve security of the communication, as shown in FIG. 9, the message transmission method may further include the following steps:

Step 901. The second message sending end serializes the first message, to obtain a byte stream.

Step 902. The second message sending end encrypts the byte stream, generates a data packet corresponding to the encrypted byte stream, and forwards the data packet to the first message forwarding agent.

Step 903. The first message forwarding agent forwards the data packet to the first target message receiving end.

Step 904. The first target message receiving end decrypts and deserializes the data packet, to obtain the first message.

Step 905. The first target message receiving end generates corresponding response information according to the first message, and the first target message receiving end serializes the response information, to obtain a corresponding byte stream.

Step 906. The first target message receiving end encrypts the corresponding byte stream, generates a data packet corresponding to the encrypted byte stream, and forwards the corresponding data packet to the first message forwarding agent.

Step 907. The first message forwarding agent forwards the corresponding data packet to the second message sending end.

Step 908. The second message sending end decrypts and deserializes the corresponding data packet, to obtain response information fed back by the first target message receiving end.

It should be noted that, the foregoing descriptions of the message transmission system based on a heterogeneous operating system is also applicable to the message transmission method based on a heterogeneous operating system in this embodiment, and details are not described herein again.

For a processing process executed by the message sending end in the operating system, reference may be made to FIG. 3, and details are not described herein again.

For a processing process executed by the message forwarding agent in the operating system, reference may be made to FIG. 4, and details are not described herein again.

For a processing process executed by the message receiving end in the operating system, reference may be made to FIG. 5, and details are not described herein again.

To achieve the foregoing embodiments, the present invention further provides a vehicle, the vehicle includes the message transmission system based on a heterogeneous operating system according to the foregoing embodiments.

It should be noted that, when the message transmission system is included in the vehicle, a message sending end in the operating system is a device with a message sending requirement in the vehicle, and a message receiving end may be a message feedback device in the vehicle.

In the description of this specification, the description of the reference terms such as "an embodiment", "some embodiments", "exemplary embodiments", "example", "specific example", or "some examples" means that the specific features, structures, materials or characteristics described with reference to the embodiment or example are included in at least one embodiment or example of the present disclosure. In this specification, schematic representations of the above terms are not necessarily directed to the same embodiments or examples. Moreover, the specific features, structures, materials, or characteristics described may be combined in any one or more embodiments or examples in a suitable manner. In addition, different embodiments or examples described in the present specification, as well as features of different embodiments or examples, may be integrated and combined by those skilled in the art without contradicting each other.

In addition, terms "first" and "second" are used merely for the purpose of description, and shall not be construed as indicating or implying relative importance or implying a quantity of indicated technical features. Therefore, features defining "first" and "second" can explicitly or implicitly include at least one of the features. In description of the present disclosure, "plurality of" means at least two, such as two and three unless it is specifically defined otherwise.

Any process or method in the flowcharts or described herein in another manner may be understood as indicating a module, a segment, or a part including code of one or more executable instructions for implementing a particular logical function or process step. In addition, the scope of preferred embodiments of the present disclosure include other implementations which do not follow the order shown or discussed, including performing, according to involved functions, the functions basically simultaneously or in a reverse order, which should be understood by technical personnel in the technical field to which the embodiments of the present disclosure belong.

The logic and/or steps shown in the flowcharts or described in any other manner herein, for example, a sequenced list that may be considered as executable instructions used for implementing logical functions, may be specifically implemented in any computer-readable medium to be used by an instruction execution system, apparatus, or device (for example, a computer-based system, a system including a processor, or another system that can obtain an instruction from the instruction execution system, apparatus, or device and execute the instruction) or to be used by combining such instruction execution systems, apparatuses, or devices. In the context of this specification, a "computer-readable medium" may be any apparatus that can include, store, communicate, propagate, or transmit the program for use by the instruction execution system, apparatus, or device or in combination with the instruction execution system, apparatus, or device. More specific examples (a non-exhaustive list) of the computer-readable medium include the following: an electrical connection (electronic device) having one or more wires, a portable computer diskette (magnetic apparatus), a random access memory (RAM), a read-only memory (ROM), an erasable programmable read-only memory (EPROM or flash memory), an optical fiber apparatus, and a portable compact disk read-only memory (CDROM). In addition, the computer-readable medium can even be paper or other suitable media on which the program can be printed, because the program can be obtained electronically by, for example, optically scanning paper or other media, then editing, interpreting, or processing in other suitable ways if necessary, and then storing it in a computer memory.

It should be understood that, parts of the present disclosure can be implemented by using hardware, software, firmware, or a combination thereof. In the foregoing implementations, a plurality of steps or methods may be implemented by using software or firmware that are stored in a memory and are executed by a proper instruction execution system. For example, if being implemented by hardware, like another implementation, the plurality of steps or methods may be implemented by any one of following common technologies in the art or a combination thereof: a discrete logic circuit of a logic gate circuit for realizing a logic function for a data signal, an application-specific integrated circuit having a suitable combined logic gate circuit, a programmable gate array (PGA), and a field programmable gate array (FPGA).

A person of ordinary skill in the art may understand that all or some of the steps of the methods in the foregoing embodiments may be implemented by a program instructing relevant hardware. The program may be stored in a computer-readable storage medium. When the program is executed, one or a combination of the steps of the method embodiments are performed.

In addition, the functional modules in the embodiments of the present disclosure may be integrated into one processing module, or each of the units may exist alone physically, or two or more units may be integrated into one module. The integrated module may be implemented in a hardware form, or may be implemented in a form of a software functional module. If implemented in the form of software functional modules and sold or used as an independent product, the integrated module may also be stored in a computer-readable storage medium.

The storage medium mentioned above may be a ROM, a magnetic disk, an optical disc, or the like. Although the embodiments of the present disclosure have been shown and described above, it can be understood that, the foregoing embodiments are exemplary and should not be understood as limitation to the present disclosure. A person of ordinary skill in the art can make changes, modifications, replacements, or variations to the foregoing embodiments within the scope of the present disclosure.

## Claims

1. A message transmission system based on a heterogeneous operating system, wherein the message transmission system comprises a first operating system and a second operating system, the first operating system is different from the second operating system, a network topology corresponding to the first operating system comprises a first message forwarding agent and a first message receiving end, and a network topology corresponding to the second operating system comprises a second message sending end, wherein
the first message forwarding agent is separately connected to the first message receiving end and the second message sending end, and is configured to perform message transmission between the second message sending end and the first message receiving end.

2. The message transmission system based on a heterogeneous operating system according to claim 1, wherein the network topology corresponding to the first operating system further comprises a first message sending end, and the network topology corresponding to the second operating system further comprises a second message forwarding agent and a second message receiving end, wherein
the second message forwarding agent is separately connected to the first message sending end and the second message receiving end, and is configured to perform message transmission between the first message sending end and the second message receiving end.

3. The message transmission system based on a heterogeneous operating system according to claim 1 or 2, wherein the first message forwarding agent is communicatively connected to the first message receiving end through a specified first IP address and first port number, and the first message forwarding agent is communicatively connected to the second message sending end through the specified first IP address and first port number, wherein the first IP address and the first port number are bound to the first message forwarding agent.

4. The message transmission system based on a heterogeneous operating system according to claim 2, wherein the second message forwarding agent is communicatively connected to the first message sending end through a specified second IP address and second port number, and the second message forwarding agent is communicatively connected to the second message receiving end through the specified second IP address and second port number, wherein the second IP address and the second port number are bound to the second message forwarding agent.

5. The message transmission system based on a heterogeneous operating system according to any one of claims 1 to 4, wherein there are N first message receiving ends, N is a positive integer greater than 1, and each first message receiving end has a service identifier, and
the first message forwarding agent is further configured to: receive a first message sent by the second message sending end, obtain a first target message receiving end that matches a service identifier in the first message, and forward the first message to the first target message receiving end, wherein the first target message receiving end is at least one of the N first message receiving ends.

6. The message transmission system based on a heterogeneous operating system according to claim 5, wherein the second message sending end is further configured to: serialize the first message, and send a serialized first message to the first message forwarding agent;
the first message forwarding agent is further configured to forward the serialized first message to the first target message receiving end; and
the first target message receiving end is further configured to deserialize the serialized first message, to obtain the first message.

7. The message transmission system based on a heterogeneous operating system according to claim 5 or 6, wherein the second message sending end is further configured to: encrypt the first message, and send an encrypted first message to the first message forwarding agent;
the first message forwarding agent is further configured to forward the encrypted first message to the first target message receiving end; and
the first target message receiving end is further configured to decrypt the encrypted first message, to obtain the first message.

8. The message transmission system based on a heterogeneous operating system according to any one of claims 2 to 7, wherein there are M second message receiving ends, M is a positive integer greater than 1, and each second message receiving end has a service identifier, and
the second message forwarding agent is further configured to: receive a second message sent by the first message sending end, obtain a second target message receiving end that matches a service identifier in the second message, and forward the second message to the second target message receiving end, wherein the second target message receiving end is at least one of the M second message receiving ends.

9. A message transmission method based on a heterogeneous operating system performed by applying the message transmission system based on a heterogeneous operating system according to any one of claims 1 to 8, wherein the first message forwarding agent performs message transmission between the first message receiving end and the second message sending end.

10. The message transmission method based on a heterogeneous operating system according to claim 9, wherein the first message forwarding agent receives a first message sent by the second message sending end, obtains a first target message receiving end that matches a service identifier in the first message, and forwards the first message to the first target message receiving end, wherein the first target message receiving end is at least one of N first message receiving ends, and N is a positive integer greater than 1.

11. The message transmission method based on a heterogeneous operating system according to claim 10, wherein the second message sending end serializes the first message, and sends a serialized first message to the first message forwarding agent;
the first message forwarding agent forwards the serialized first message to the first target message receiving end; and
the first target message receiving end deserializes the serialized first message, to obtain the first message.

12. The message transmission method based on a heterogeneous operating system according to claim 10 or 11, wherein the second message sending end encrypts the first message, and sends an encrypted first message to the first message forwarding agent;
the first message forwarding agent forwards the encrypted first message to the first target message receiving end; and
the first target message receiving end decrypts the encrypted first message, to obtain the first message.

13. A vehicle, comprising the message transmission system based on a heterogeneous operating system according to any one of claims 1 to 8.
